# EUROPEAN PATENT APPLICATION

(11) **EP 4 806 607 A1**
(43) Date of publication of application: **16.09.2026**
(21) Application number: 26164757.2
(22) Date of filing: 13.03.2026
(51) Int. Cl.: B26D 7/01, B26D 7/06, B26D 7/27, B65G 39/20, B65G 47/24, B26D 1/02, B26D 3/08, B26D 3/10, B26D 3/12, B26D 3/16, B26D 7/26, B65G 17/34, B65G 33/06

(54) **MACHINE FOR FORMING A HELICAL CUT IN A FOOD PRODUCT**

(30) Priority: 14.03.2025 US 202563772098 P
(71) Applicant: Cozzini LLC, Elk Grove Village, IL 60007 (US)
(72) Inventor: KING, Edwin Earl, Elk Grove Village, 60007 (US)
(74) Representative: Mathys & Squire

(57) **Abstract**

An apparatus for forming a spiral cut in a cylindrical member is provided, and includes a base that supports a conveyor, an upper housing with a blade thereon, with an edge of the blade extending downwardly toward the conveyor. The conveyor system includes a plurality of spaced sub-assemblies, each formed in the same manner. Each includes three cylinders that are freely rotatable about their longitudinal axis. The first and second cylinders of each sub assembly are disposed to establish an open space between a closest adjacent surface of each of the first and second cylinders, a third of the three cylinders is disposed such that the longitudinal axis of the third cylinder is aligned at a vertical position below the longitudinal axes of the first and second cylinders and the longitudinal axis of the third cylinder is vertically aligned within the open space.

## Description

### CROSS-REFERENCE TO RELATED APPLICATIONS

This application claims priority from United States Provisional Patent Application No. 63/772,098, filed on March 14, 2025, the entirety of which is hereby incorporated by reference herein.

### BACKGROUND OF INVENTION

This application is directed to a machine that is confirmed to form a cut into a food product.

### SUMMARY OF THE INVENTION

A first representative embodiment of the disclosure is provided. The embodiment includes an apparatus for forming a spiral cut in a cylindrical member. The apparatus includes a base that supports a moving mechanism along the base,
an upper housing that is fixed to the base and is positioned to face the base,
the upper housing supports an elongate blade thereon, with an edge portion of the blade extending downwardly from the upper housing toward the base;
the moving mechanism comprises a conveyor system that includes first and second tracks on opposite sides thereof, and moves along the base,
wherein the conveyor system comprises a plurality of spaced sub-assemblies disposed therein, each sub-assembly of the plurality of spaced sub-assemblies is formed in the same manner, wherein the conveyor system moves along a movement direction when it moves along the base and directly below the upper housing;
wherein each sub-assembly includes three cylinders that are rotatably mounted with respect to the conveyor system and are each freely rotatable about a longitudinal axis that extends through a center of each cylinder, wherein the first and second cylinders of the three cylinders of each sub assembly are disposed to establish an open space between a closest adjacent surface of each of the first and second cylinders, wherein a third of the three cylinders is disposed such that the longitudinal axis of the third cylinder is aligned at a vertical position below the longitudinal axes of the first and second cylinders and the longitudinal axis of the third cylinder is vertically aligned within the open space.

Another representative embodiment of the disclosure is provided. The embodiment includes an apparatus for forming a spiral cut in a cylindrical member. The apparatus includes a base that supports a housing, a rotating member, and a fixed member, the fixed member is supported by one or both of the housing and the base the rotating member is supported by one of the housing or the base, the fixed member comprises an inlet is configured to direct a cylindrical member to be fed into a cylindrical space that is formed by the fixed member or a combination of the fixed member and the rotating member, the cylindrical member received within the cylindrical space translates through the cylindrical space, and the cylindrical space allows the cylindrical member to move longitudinally therethrough and longitudinally with respect to the rotating member, and
a blade with an edge portion that extends into a position within the cylindrical space, and as the cylindrical member translates through the cylindrical space a leading end of the cylindrical member contacts and is cut into by the edge portion of the blade.

The disclosure includes representative embodiments that are commiserate with the scope of the Numbered Paragraphs 1-35 provided at the conclusion of the specification below, as well as combinations of those Numbered Paragraphs.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF DRAWINGS

FIG. 1 is a top perspective view of a first slicing machine for forming a helical cut around the circumference and along the length of an elongate food presented to the machine.
FIG. 2 is a rear top perspective view of the machine of FIG. 2 with a sliced food falling from the conveyor of the machine.
FIG. 3 is a top perspective view of the machine of FIG. 1 with the upper housing and the food supply mechanism removed.
FIG. 4 is side vertical perspective view of detail AA of FIG. 3, depicting the cutting edge cutting into three food items that are aligned upon three different sub-assemblies that are disposed below the cutting edge.
FIG. 5 is a side cross-sectional view from a side downward perspective of a portion of the machine of FIG. 1.
FIG. 6 is another side cross-sectional view from a side upper perspective of another portion of the machine of FIG. 1.
FIG. 7 is a perspective view of a lower side of the upper housing of the machine of FIG. 1.
FIG. 8 is a front cross-sectional view of the machine of FIG. 1, depicting the cutting edge cutting into a food item disposed below the cutting edge.
FIG. 8A is a perspective view of an assembly to support the knife upon the upper housing of FIG. 1, depicting the knife being supported in a vertical position.
FIG. 8B is a front view of the assembly of FIG. 8A with the knife supported in the vertical position.
FIG. 8C is a cross-sectional view similar to the view of FIG. 8, depicting the knife disposed at an acute angle with respect to the top surface of the upper housing and at the same acute angle to a longitudinal axis through the food item being cut by the knife edge.
FIG. 8D is a perspective view of an assembly to support the knife upon the upper housing depicting the knife being supported at the acute angle depicted in FIG. 8C.
FIG. 8E is a front view of the assembly of FIG. 8D with the knife supported at the acute angle depicted in FIG. 8C.
FIG. 9 is a detailed side view of machine of FIG. 1 depicting the cutting edge into two neighboring food items.
FIG. 9A is a detail view of a food item that is supported upon the rollers, with the rollers properly positioned to support the larger food item.
FIG. 9B is another detail view of a food item that is supported upon the rollers, with a diameter of the food item being larger than the food item depicted in FIG. 9A and the rollers properly positioned to support the larger food item.
FIG. 10 is a perspective view of a second slicing machine.
FIG. 11 is another perspective view of the second slicing machine of FIG. 1 with the housing removed.
FIG. 12 is a side view of the first and second rotatable members and the wedge portion of the slicing machine rotating in the direction AA.
FIG. 13 is a top perspective view of the machine of FIG. 10 with the upper fixed portion and the housing removed.
FIG. 14 is a top view of the second rotatable member and the cutting edge of the blade cutting into a food item disposed therein.
FIG. 15 is a perspective side cross-sectional view of the machine of FIG. 10 depicting a food item interacting with the cutting edge and a second food item above that food item before falling onto the cutting edge.
FIG. 16 is a side cross-sectional view of the machine of FIG. 10, with the same operational position of FIG. 15, depicting a helical cut made along the food item that is being cut by the cutting blade.

### DETAILED DESCRIPTION OF THE INVENTION

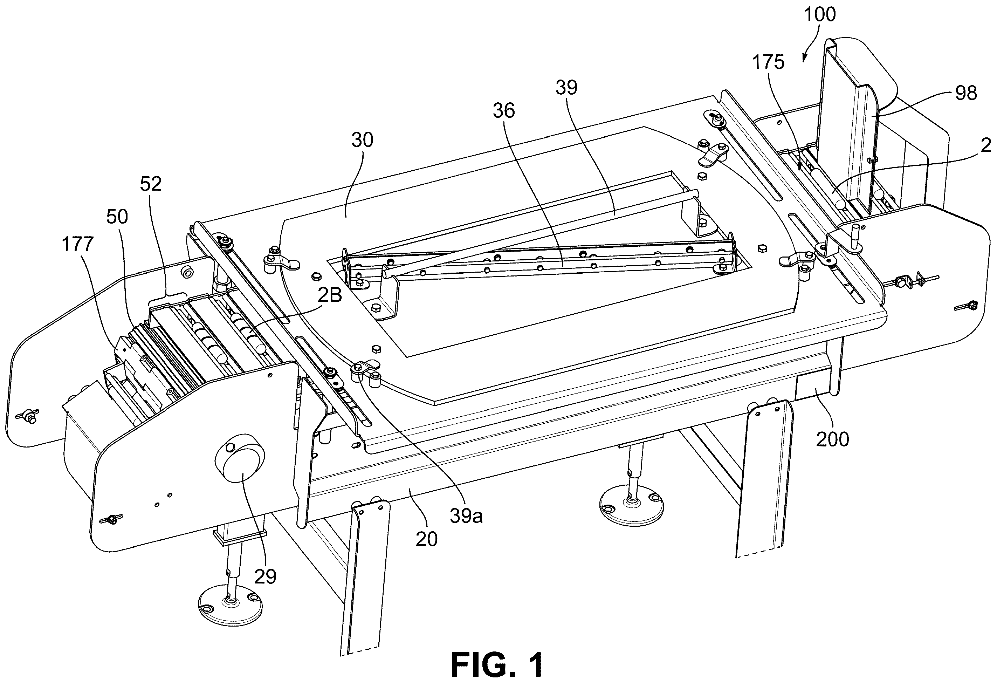

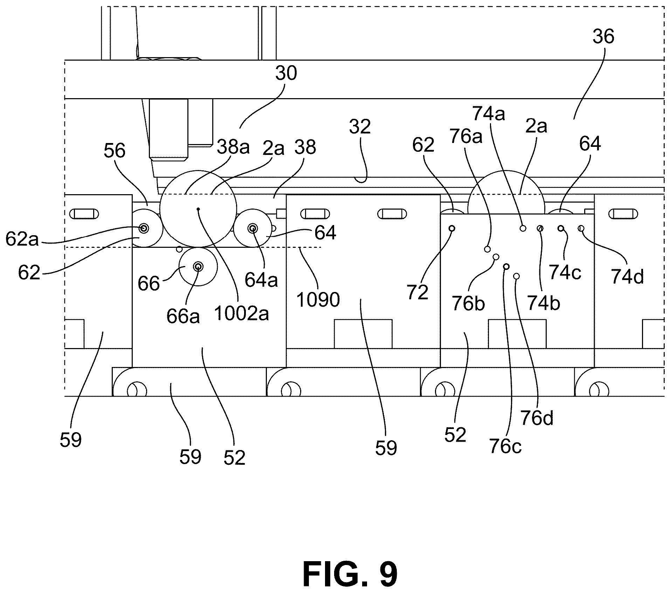

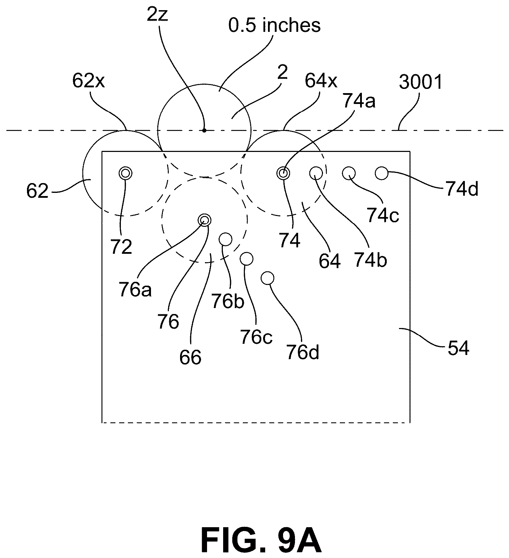

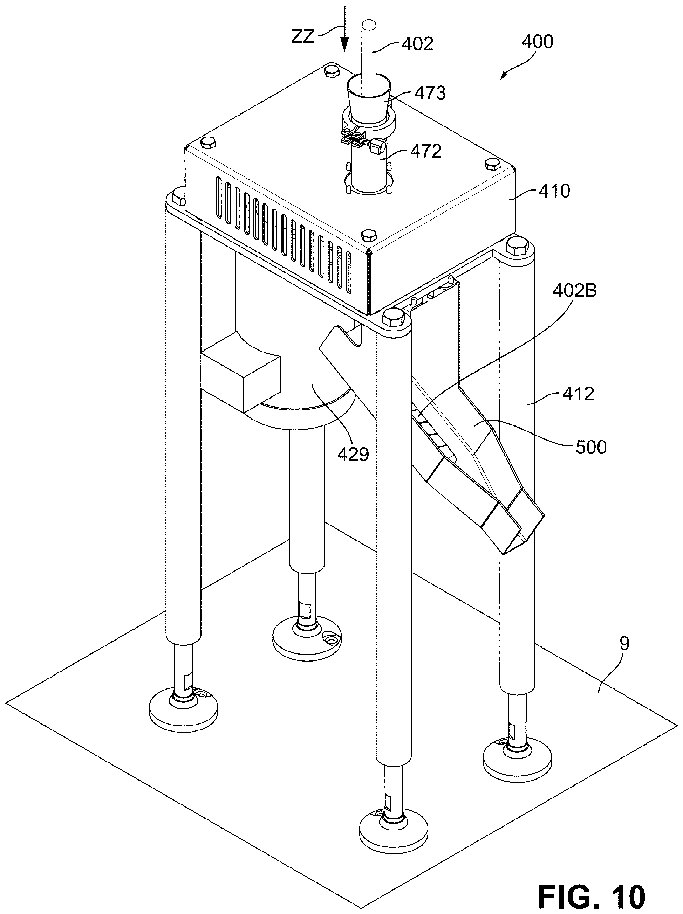

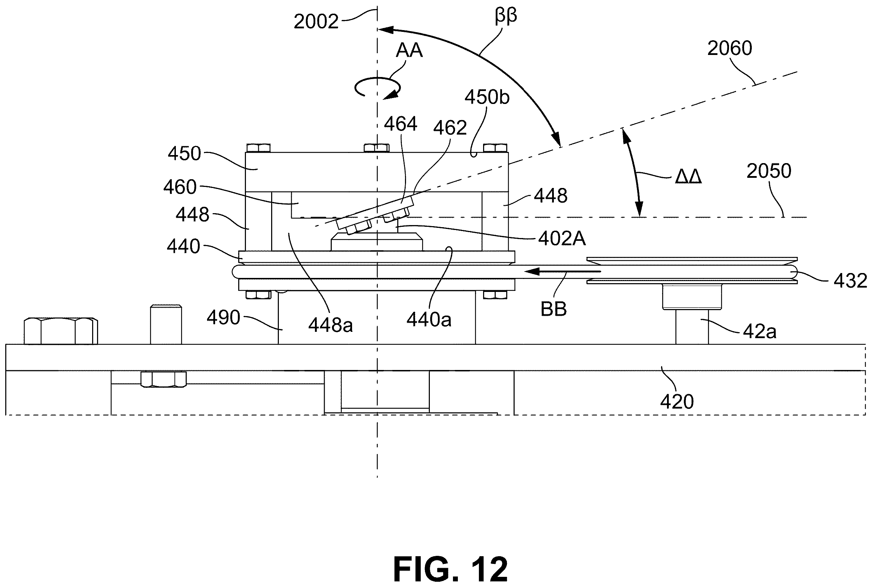

Turning now to FIGs. 1-9B, a first slicing machine 100 is provided, and in FIGs. 10-16 a second slicing machine 400 is provided. Both the first and second slicing machines are configured to apply a spiral cut or slice (helical) into an elongate food portion, such as a hot dog, a bratwurst, or another type of relatively cylindrical food. The slicing machines 100, 400 could also be used for providing a helical cut into other types of cylindrical materials that are not food. For the sake of brevity, the disclosure herein will be described with respect to the use with hot dogs, but one of ordinary skill in the art with a thorough review and understanding of this specification will readily appreciate how the machines could be used for other types of cylindrical foods, or non-foods.

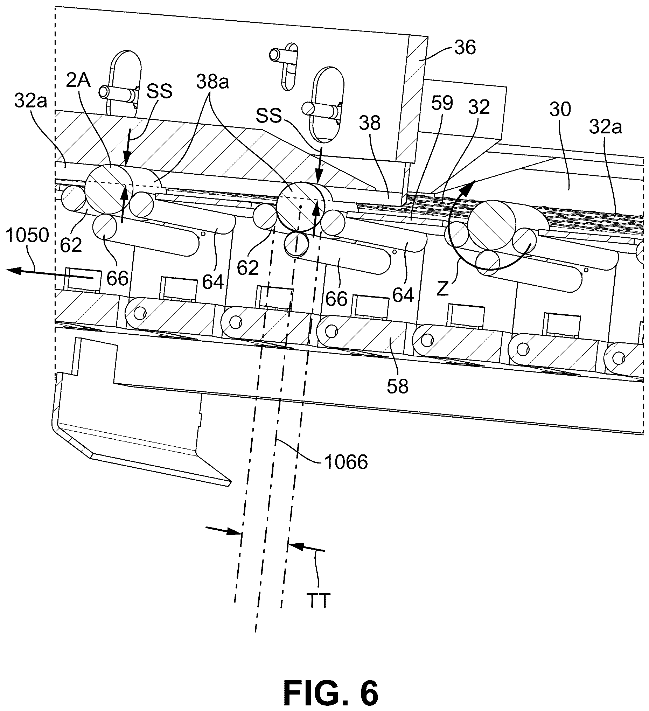

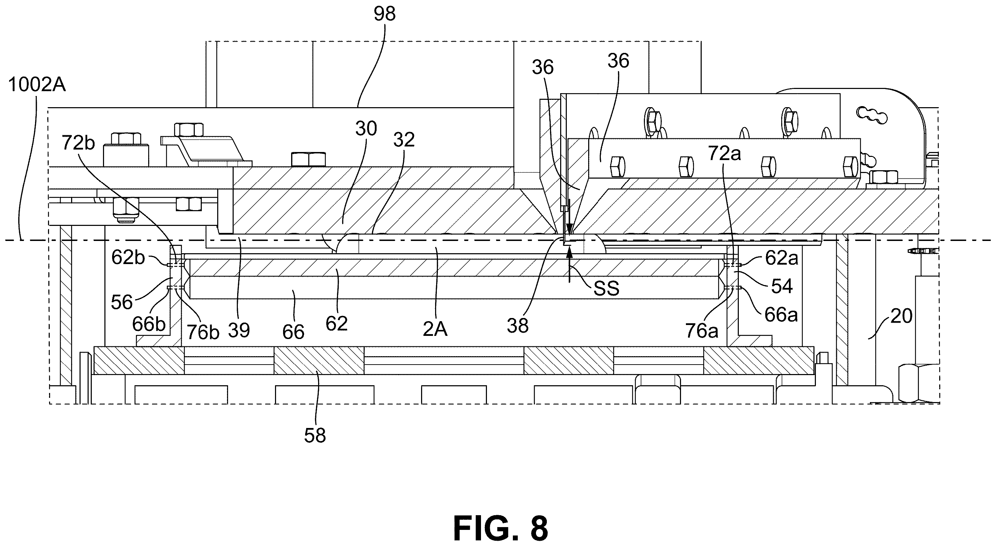

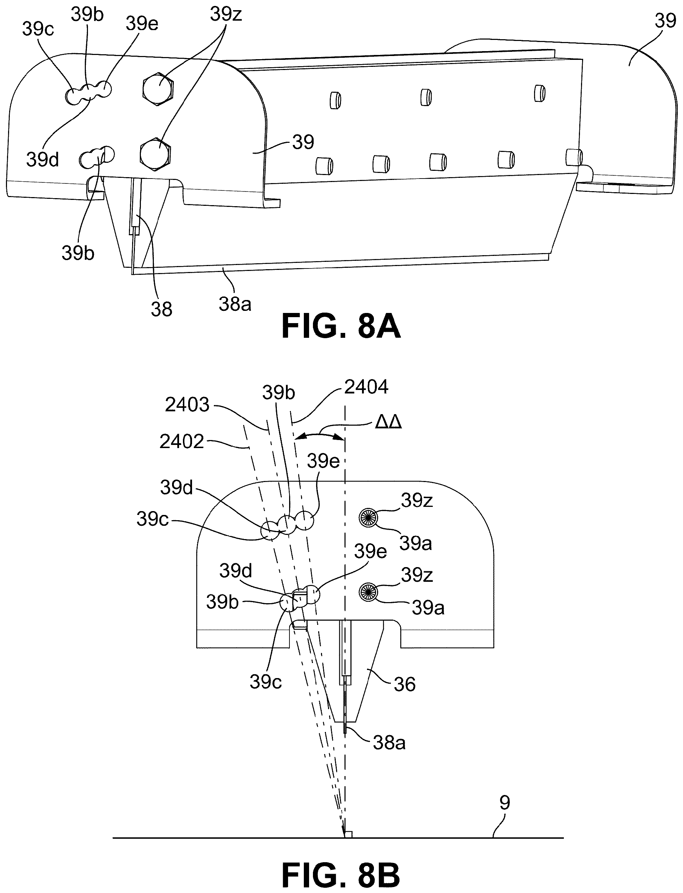

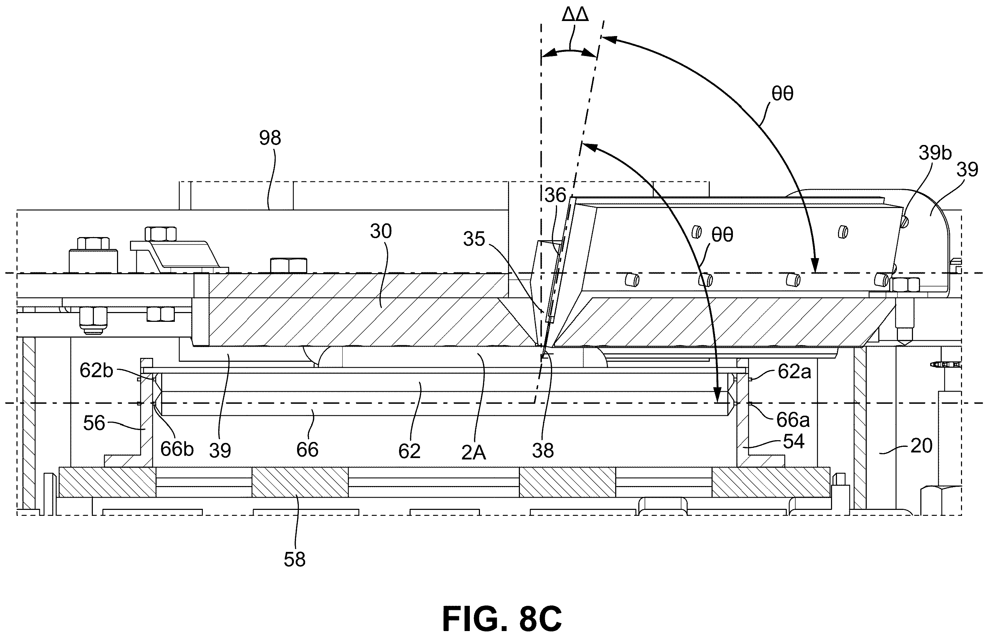

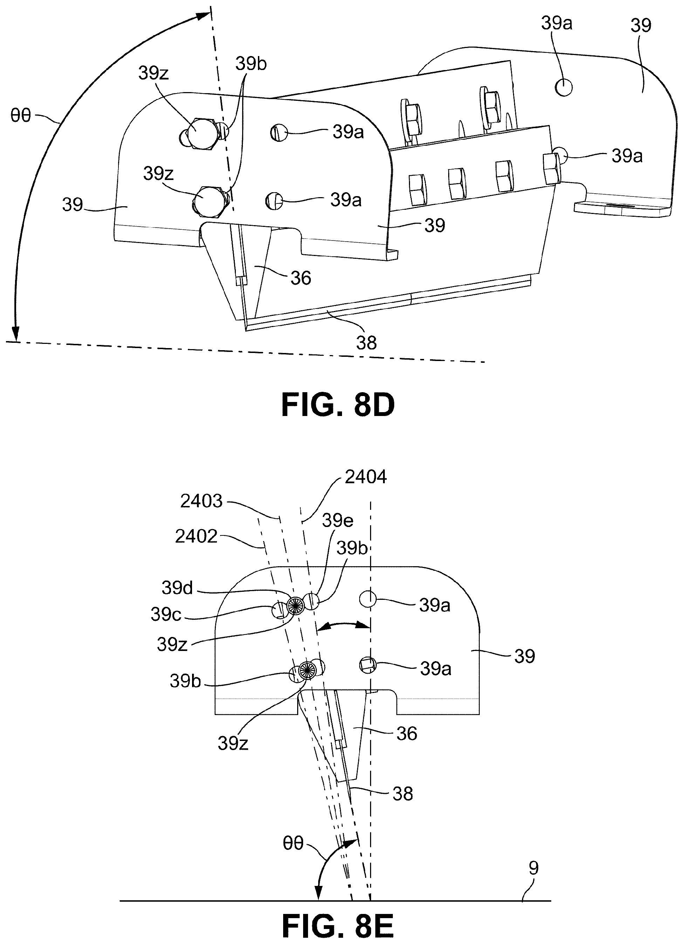

The slicing machines 100, 400 disclosed herein are configured to receive an infeed of hot dogs and establish a helical cut therealong. The helical cut is preferably formed through an outer circumferential surface of the hot dog and extend only part of the way within the body of the hot dog. In a preferred embodiment, the machines 100, 400 are configured to establish a cut that extends about 25% through the diameter of the hot dog (e.g. distance S, FIGs. 6, 8). Other depths are possible, such as in a range of about 10% to about 35% of the diameter of the hot dog, inclusive of all values within this range. The structure to establish the cutting depth is disclosed herein for each embodiment, The machines 100, 400 are also configured to establish a continuous cut along the entire or a portion of the hot dog, with the cut arranged at an acute angle with respect to a longitudinal axis through the hot dog. The cut angle upon the hot dog is arranged based upon an angular position of the cutting blade (discussed below for each embodiment) with respect to a line of movement of the hot dog through the machine, as well as the diameter of the hot dog to be cut and the desired distance between adjacent parallel cuts (cutting pitch) within the hot dog. One of ordinary skill in the art with a thorough review and understanding of this specification will readily be able to construct the disclosed machines and to configure their operation to achieve the a desired cutting angle and cutting pitch for a given hot dog diameter with merely routine optimization.

The first slicing machine 100 is provided. The machine rests upon a base 20 that rests upon a floor 9, or upon an intermediate surface or structure that ultimately rests upon a floor. The base supports a moving mechanism, such as a conveyor 50, that moves along the base 20, and supports an upper housing 30, which is fixed to the base and establishes a space 39 between the moving mechanism and the upper housing 30 to allow food products to extend therebetween.

The moving mechanism may be a conveyor 50 that is an endless member that is moved (by a motor 29) with respect to the base 20. The motor 29 may be connected to a controller 1200 (schematic, FIG. 1) that directs the operation of the machine 100, i.e. sets the movement and speed of the moving mechanism, i.e. based upon a sensed signal (or a received signal) indicative of food items 2 being ready to be processed of the machine 100, or manual signals.

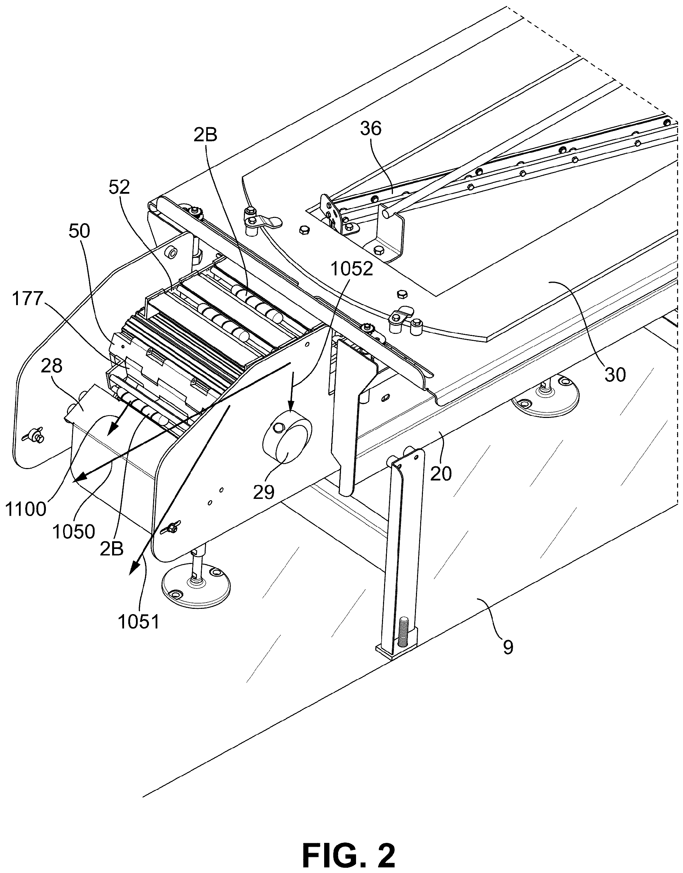

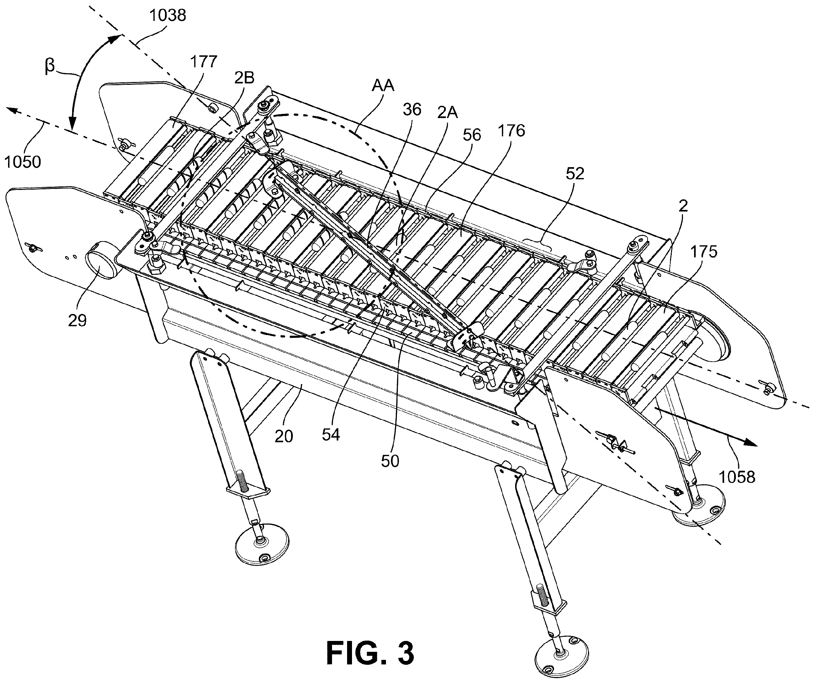

The conveyor 50 includes a first portion 176 that is disposed to move (when the conveyor 50 is urged to move by the motor 29) directly below a bottom surface of the upper housing with the space 39 between the conveyor 50 and the upper housing 30. The first portion 176 of the conveyor 50 moves in a direction 1050 (FIG. 3) with respect to the base 20 and below the upper housing 30. The plurality of sub-assemblies 52 (discussed in detail below) that are positioned within the first portion 176 all extend along a single plane that is parallel to the direction 1050. The first portion 176 leaves from under the upper housing 30 moves to a first transition portion 177 that rotates downwardly from the direction 1050, i.e. the sub-assemblies within the first transition portion 177 extend in a direction that includes a vector component 1052 that extends toward the floor 9 (FIG. 2) and may have a vector component that extends in the direction 1050. In some embodiments like depicted in FIG. 2, the first transition portion 177 may be along a curve, or in other embodiments, the first transition portion 177 may extend directly from the direction 1050 to a direction that is directed entirely with the vector component 1052 toward the floor 9. In preferred embodiments, the first transition portion 177 may be along a curve, such as directed to transition from the direction 1050 to the direction 1052 through a round gear. As can be best seen in FIG. 2, the base 20 may have a ramp 28 that food items 2B that are upon a respective sub-assembly 52 that has entered the first transition portion 177 may fall off of the sub-assembly as the orientation of the sub-assembly 52 moves from the direction 1050 to the direction 1052, as depicted upon a cut food item 2B moving in the direction of arrow 1100 in FIG. 2, and onto the ramp 28. The ramp 28 may lead to another machine where the cut food items 2B is further processed, e.g. packaged, cooked, frozen, etc. (not shown).

The conveyor 50 may include a return portion (not specifically shown, but below the conveyor portions 175, 176, 177 depicted in FIG. 3) that moves within the base, typically in a direction 1058 that is parallel to and in the opposite direction of direction 1050 (exact direction, or a general direction (e.g. with potential idlers, tension members within the base to ensure the movement of the conveyor 50 is proper, as would be understood by one of ordinary skill in the art after a thorough review of this specification)) to transition to a second transition portion 175. The second transition portion 175 moves from the return portion to an orientation where the sub-assemblies 52 are aligned to receive food items 2 to be processed by the machine 100 and to get into the alignment of the first portion 176 of the conveyor 50 that is discussed above.

The base 20 may support a food supply mechanism 98 that receives food items 2 that are desired to be processed by the machine 100, and deposits food items 2 onto sub-assemblies 52 that are within the second transition portion 175 of the conveyor 50. In some embodiments, the food supply mechanism 98 may be feed mechanism that receives a stacked volume of food items 2 and is positioned over the conveyor 50 such that a (i.e. one) food item 2 is disposed upon each sub-assembly 52 as the sub-assembly passes by the output of the supply mechanism 98. In the embodiment depicted in the figures, the supply mechanism 98 is disposed directly above the conveyor 50, and specifically the introduction portion 175 (i.e. the second transition portion 175) of the conveyor 50, as discussed above, such that a single food item 2 is dropped onto each sub-assembly 52 as it moves below the output of the supply mechanism 98. In some embodiments, the supply mechanism 98 may include a door that is normally closed, with each sub-assembly 52 comprising a mechanical leg or other structure that interacts with the door as the sub-assembly 52 moves by the supply mechanism 98, with the movement of the mechanical leg causing the door to open and deposit a single food item onto the sub-assembly 52 and then re-close with continued movement of the sub-assembly. The supply mechanism 98 may be manually fed by an operator with a plurality of food items 2 to be cut (e.g. in a vertically stacked fashion as in the embodiment depicted in the figures), or the supply mechanism 98 may automatically receive a continuous feed of food items 2 to be cut therein (such as by another machine or conveyor system, not shown) that supplies and properly aligns the food items 2 within the supply mechanism 98.

The conveyor system 50 includes a plurality of sub-assemblies 52 that are fixed with respect to each other (adjacent sub-assemblies 52 connected to each other to form an endless loop) and are pivotable with respect to each other to allow the sub-assemblies 52 to each move along the path established for the conveyor, (i.e. from the introduction portion 175 (also referred to herein as the second transition portion 175), to the first portion 176, to the first transition portion 717, to the return portion (not shown, under the first portion and generally moving in the opposite direction 1058). Each sub-assembly 52 is preferably formed in the exact same manner.

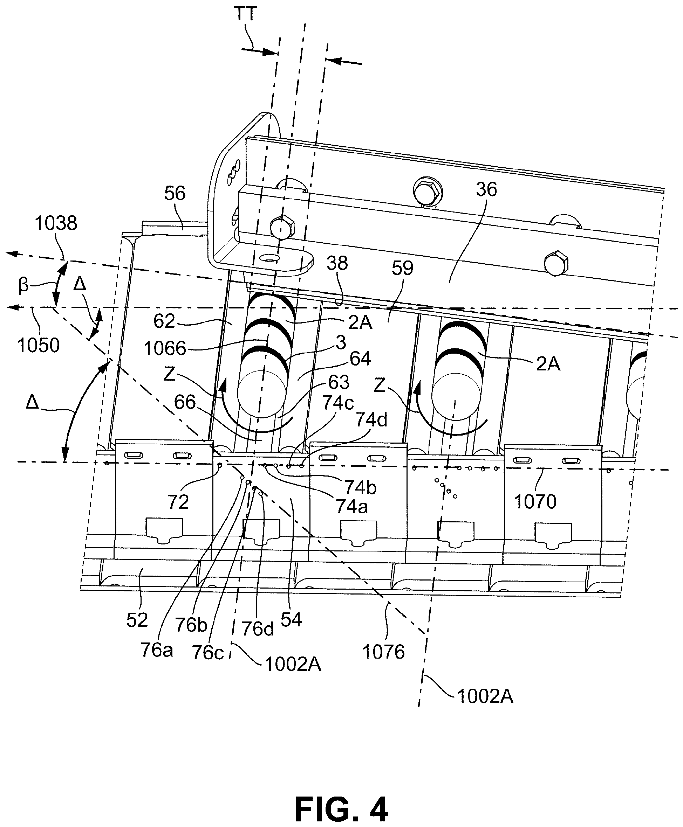

Each sub-assembly includes a first roller 62, a second roller 64, and a third roller 66. Each roller 62, 64, 66 is an idler roller, i.e. the machine does not directly transfer any torque to the rollers within the sub-assembly 52. As best depicted in FIGs. 4, 7, and 8, each sub-assembly 52 includes opposite first and second tracks 54, 56 that are separated from each other and parallel with each other that support the rollers 62, 64, 66 therebetween. Each roller has rods (e.g. 62a, 62b from the first roller; 64a, 64b from the second roller; and 66a, 66b from the third roller 66) that extend longitudinally outward from respective opposite ends of each roller along the longitudinal (rotational) axis of each roller.

Each track 54, 56 includes corresponding holes (72; 74a, 74b, 74c, 74d; 76a, 76b, 76c, 76d) that can receive respective first rods (the first track 54) and second rods (the second track 56) from the respective rollers 62, 64, 66 (e.g. hole 72 receives the rod 62a, 62b; each of holes 74a, 74b, 74c, 74d can receive the rod 64a, 64b; and each of holes 76a, 76b, 76c, 76d and receive the rod 66a, 66b) from each roller. The respective same holes (e.g. hole 72 in the first and second tracks 54, 56; the pattern of holes 74a, 74b, 74c, 74d in the first and second tracks 54, 56; and the pattern of holes 76a, 76b, 76c, 76d in the first and second tracks 54, 56) are each arranged such that each roller 62, 64, 66 is arranged such that their longitudinal (rotational) axes, that extend through the respective holes that the rods extend thru) are parallel to each other and are parallel to the direction 1050 when the respective sub-assemblies 52 move through the first portion 176 of the conveyor 50.

As best depicted in FIG. 4, the second set of holes 74a, 74b, 74c, 74d upon each track 54, 56 are disposed to allow for changing the position of the second roller 64 upon the sub-assembly 52, and the third set of holes 76a, 76b, 76c, 76d upon each track 54, 56 are disposed to allow for changing the position of the third roller 66 upon the sub-assembly 52.

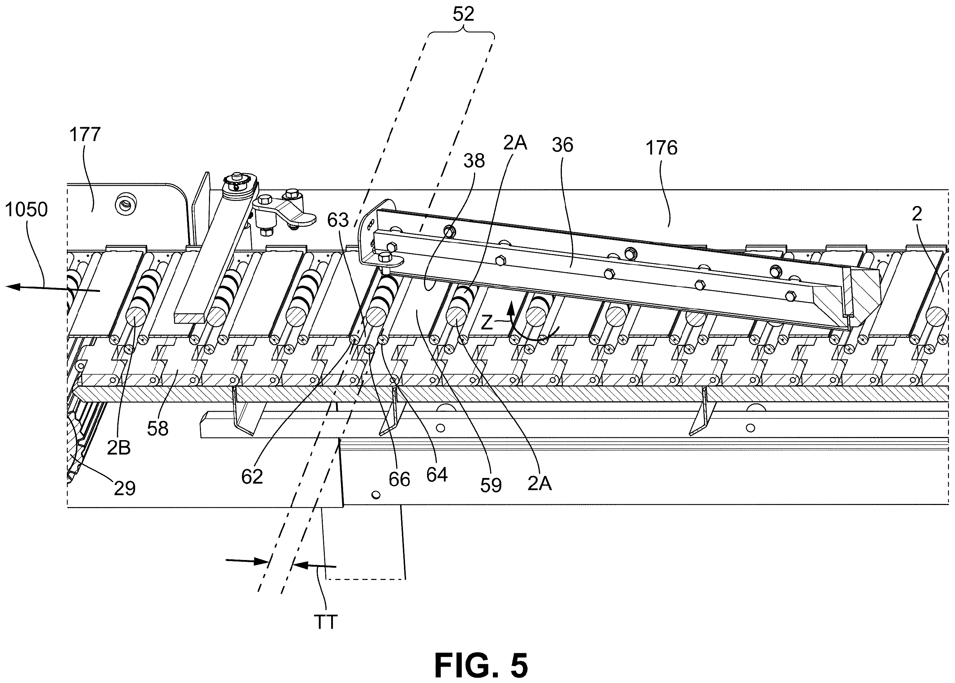

The second set of holes 74a, 74b, 74c, 74d are preferably disposed along a line 1070 that also extends through the first hole 72 (that receives the rods 62a, 62b) of the first roller 62. The second roller 64 is disposed such that its rods 64a, 64b each extend from the corresponding same hole of the second set of holes in each track 54, 56. As can be understood, the position of the second roller 64 can be set with respect to the position of the first roller 62 (by using the appropriate hole within the second set of holes) to establish a space 63 that extends a distance TT (FIGs. 4 and 5) between the closest adjacent portions of the first and second rollers 62, 64 (based upon the diameter each of the first and second rollers, which is preferably the same). The machine 100 is typically set such that the second roller 64 is positioned such that the distance TT is just slightly bigger than the diameter of the food item (2) that is intended to be used with the machine 100, taking into account the tolerances of the diameter of the food item 2 and any tolerance stacking with the positioning of the holes and the diameters of the first and second rollers 62, 64.

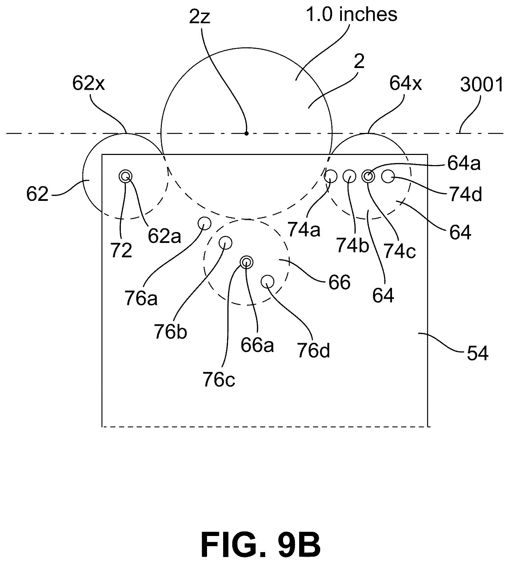

The third set of holes 76a, 76b, 76c, 76d are aligned along a line 1076 (FIG. 4) that is an acute angle Δ to the direction of motion 1050 of the conveyor 50, and at the same angle Δ to the line 1070 between the first hole 72 and the second set of holes. The acute angle Δ is about 50 degrees in the embodiment depicted in the figures. In some embodiments, the acute angle Δ may be within the range of about 35 degrees to about 60 degrees, inclusive of all angles within that range such as above (or exactly) 35, 40, 45, 50, 55, 60 degrees. The hole within the third set of holes 76a, 76b, 76c, 76d that is selected to receive the respective rods 66a, 66b of the third roller 66 is to properly position the third roller 66 with respect to the first and second rollers 62, 64. The third roller 66 is preferably aligned with the space 63 between the first and second rollers 62, 64, and in some embodiments aligned such that the longitudinal axis 1066 through the third roller 66 is disposed in the middle of the space 63. The hole of the third plurality of holes that is chosen also is below the line 1070 between the first hole 72 and the second plurality of holes 74a, 74b, 74c, 74d is vertically above the location of the longitudinal axis 1066 of the third roller 66 (i.e. the longitudinal axis of the third roller 66 is vertically below the longitudinal axes of the first and second rollers 62, 64). The third roller 66 is preferably positioned such that a tangent line (1090, FIG. 9) that extends through upper-most surface of the third roller 66 (e.g. the point of the third roller that points directly upward) is a horizontal line that extends through bodies of the first and second rollers 62, 64. Typically, the tangent line 1090 extends through the first and second rollers 62, 64 below the longitudinal axes of the respective roller 62a, 64a, and in preferred embodiments, the tangent line extends through the first and second lowers 62, 64 proximate to a bottom most location of each of the first and second rollers 62, 64. FIG. 9 depicts the tangent line 1090 in an arrangement where the tangent line 1090 just passes through the lowest portion of the first and second rollers 62, 64, i.e. the tangent line 1090 substantially forms a tangent line that passes across the portion that each of the first and second rollers that faces directly downward. As depicted best in FIG. 4, the food item 2 that is received upon the sub-assembly 52 rests upon the third roller 66, and the position of the first and second rollers maintain the food item properly positioned within the gap 63 within the sub-assembly as the sub-assembly 52 moves through the first portion 176 of the conveyor 50, and as the food item 2A contacts the lower surface 32 of the upper housing 30, causing the food item 2A to rotate as discussed below. Providing the second set of holes and the third set of holes allow the conveyor to be adjusted (and particularly the positions of the second and third rollers 64, 66) within each sub-assembly based upon the size of the food item 2 that is received by the conveyor system 50.

In a preferred embodiment, the first hole (72), the second set of holes (74a, 74b, 74c, 74d), and the third set of holes (76a, 76b, 76c, 76d) are aligned to support food items 2 of different diameters, such as in a preferred embodiment the rollers can be aligned to support food items that are 0.5 inches, 0.75 inches, 1 inch, and 1.25 inches (which are typical diameters for hot dogs). Other positions of the holes within the second and third sets of holes for different sized food items (such as typical diameters of food items in world-wide markets that use the metric system for diameters instead of imperial units - with typical metric diameters selected) may be provided. The holes are typically aligned, in combination with the diameter of each roller (62, 64, 66 - which in this embodiment depicted in the figures is 0.5 inches), such that when the rollers 62, 64, 66 are positioned upon the correct holes (e.g. holes 74a, 76a for a food item that is 0.5 inches (FIG. 9A), or holes 74c, 76c for a food item that is 1.0 inches (FIG. 9B)), the rollers support the food item such that a horizontal plane (3001) through the center (2z) along the length of the food item 2 is at the same vertical position as the upper most facing surface (62z, 64z) of the first and second rollers, as depicted in FIGs. 8A (0.5 inch food item) and 9B (1.0 inch food item), in other words the horizontal plane 3001 through the center 2z of the food item 2 is substantially tangent with the upper most facing surface of each of the first and second rollers 62z, 64z. The term substantially (in addition to the other definitions provided herein) also accounts for typical tolerances for the size of food items 2 to be processed by the machine. This configuration of the position of the first, second, and third rollers 62, 64, 66 allows the rollers to support the food item 2 within the open space between the three rollers at at least two points and typically three points (i.e. the food item contacts at least two of the rollers and typically all three rollers along its length). The positioning of the rollers such that a plane through the center of the food item is upon the top facing surface of the first and second rollers has been found to be beneficial to maintain the food items (especially food items with diameters that are larger than the diameter of the rollers) within the cavity formed by the three rollers to receive the food item 2. Further, the different alignments provided within the tracks (54, 56) allows the first and second rollers to contact the food item 2 below the plane 3001 through the center of the food item, but relatively close to the plane. This, especially for food items with a diameter that is significantly larger than a diameter of the rollers allows the food item to be deformed slightly (due to the compression between the upper housing 30 and the contact points of the food item to the rollers 62, 64, 66) but for the food item being compressed to be maintained in a cross-sectional shape that is still close to circular to allow the food item to continue rotating along its axis as the conveyor 50 causes the food item 2A to move below the knife 36, so that the cut into the food item by the knife edge 38a is as desired.

Each roller is as thin as possible (to properly support the food item thereon in a rolling manner) to minimize the force (torque) needed to cause each roller to rotate about its longitudinal axis, and the connection between the rods and holes are developed to minimize the friction created therein that would resist roller rotation. In some embodiments, the first, second, and third rollers 62, 64, 66 have the same diameter. In another embodiment, the first and second rollers 62, 64 have the same diameter, and the third roller 66 has a different diameter, which may be slightly smaller than the diameter of the first and second rollers 62, 64, or slightly larger than the diameter of the first and second rollers.

Each sub-assembly 52 may include one or more spacers 59 that are disposed between the roller portions of adjacent sub-assemblies 52. The spacer 59 is provided to allow for the necessary and desired spacing between the food item 2 (2A, 2B) disposed upon each sub-assembly 52 to, in combination with the movement speed of the conveyor 50, determine the capacity of the machine to process food items 2 that are provided to the machine, and the linear distance between adjacent food items 2A upon adjacent sub-assemblies 52 within the first portion 175 of the conveyor 50, and to determine the output rate of the machine (and input rate of food items 2 into the machine 100. In some embodiments, more than one spacer 59 may be provided that are hingedly connected to each other to allow for the conveyor to take more dramatic turns than would be possible for a spacer of the same width was a single rigid member. When the position of the second and third rollers 64, 66 is modified (as discussed herein to accept food items with different diameters), the width of the spacers 59 may be adjusted (i.e. by using different spacers within the conveyor 50) to maintain the separation between adjacent food items 2 upon the conveyor 50 as desired for the desired output (and input into) of the machine.

The first and second tracks 54, 56 are supported by a central support 58 that extends therebetween and establishes and maintains the separation between the first and second tracks 54, 56. The central support 58 interacts with the motor 29 to cause the conveyor 50 to move along its track within the base.

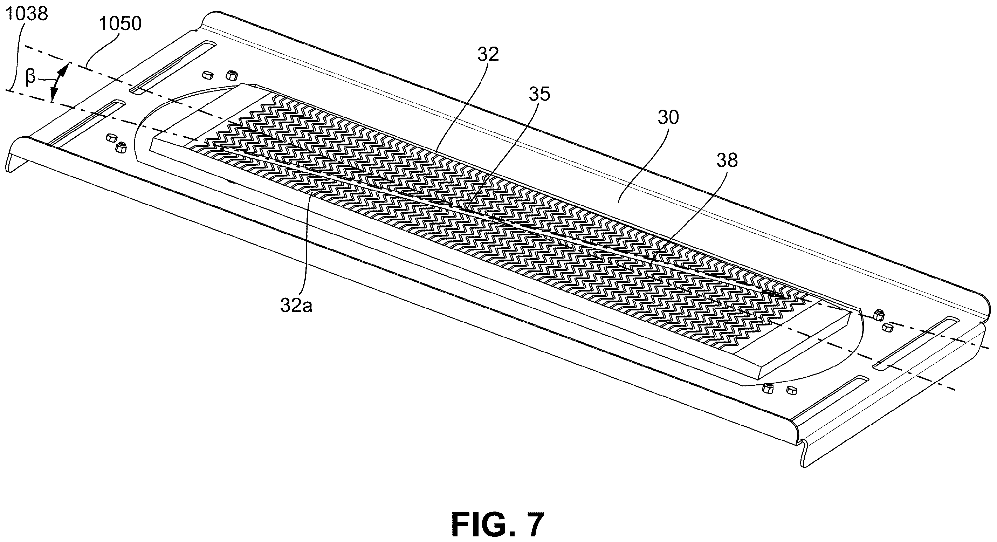

The upper housing 30 is best understood with reference to FIGs. 2, 4, 5, and 7. The upper housing 30 is positioned with respect to the base 20, such that a distance between the lower surface 32 of the upper housing 30 and the top of the third roller 66 within each sub-assembly 52 that is in the first position 176 below the upper housing is just smaller than a nominal diameter of the food item 2A that is configured to be positioned upon each sub-assembly. When the sub-assembly 52 approaches and moves under the upper housing 30, the food item 2A contacts the lower surface 32 and due to friction between the food item 2A and the lower surface 32 rolls as the sub-assembly 52 translates below the upper housing 30 (direction Z, FIG. 4). The distance is set such that the food item freely rolls with the worst case tolerance stacking (e.g. the third roller 66 is set at a highest position possible based upon tolerances and the food item 2A is the largest diameter within the tolerances). In some embodiments, the bottom surface 32 of the upper housing 30 may have an pattern thereon, such as the zig-zag protrusions 32A depicted in FIG. 7 that maximize the friction between the food item 2A and the lower surface 32 to promote rolling contact.

The upper housing 30 includes slot 35, through which a knife 36 extends therethrough, such that a cutting edge 38 of the knife 36 extends below bottom surface 32 of the upper housing 30, as best shown in FIG. 9. The slot 35 is arranged at an acute angle β with respect to the direction of motion 1050 of the conveyor 50 through the first portion 176 below the upper housing 30. The angle β forms the angle that a cut from cutting edge 38 into the rolling food item 2A below the knife. In the embodiment depicted in figures the angle β is about 17.5 degrees. The acute angle β can be any angle that is desired for the angle of the cut 3, and is determined based upon the length of the food item and the desired pitch between adjacent cuts 3 within the food item 2A and the number of desired rotations of the cut through the food item. In some embodiments, the angle β may be within the range of about 30 to about 10 degrees, inclusive of all angles within the range. One of ordinary skill in the art with a thorough review and understanding of this specification will be able to set the angle β based upon food item 2A to be cut and the desired pitch.

The knife 36 is supported by a support that is fixed to the upper housing 30. The knife 36 is set such that the cutting edge 38 extends the desired depth below the lower surface 32 of the upper housing 30, which establishes the cutting depth SS into the food item 2A that rolls below the upper housing and the cutting edge 38, as discussed above. The cutting depth is depicted schematically in FIG. 9 as dashed line 38a. As can be understood, when the rolling food item 2A below the upper housing contacts a leading edge of the cutting edge 38, the cutting edge cuts into the food item 2A and continues to cut into the food item 2A as it rolls along the upper housing 30 thereby making a continuous helical cut 3 into the food item until the food item 2A rolls past the trailing edge of the cutting edge 38.

In some embodiments the cutting edge 38 is positioned such that the helical cut extends along the entire length of the food item 2A (discounting potentially the tip portion of the food item, where the diameter of the food item decreases to longer contact the cutting edge 38). In some other embodiments, the knife may be sized such that the cutting edge only cuts a central portion of each food item 2A, i.e. the leading edge of the cutting edge first contacts the food item 2A inboard from an end of the food item and/or the trailing edge of the cutting edge 38 is aligned inboard of the opposite end of the food item 2A. In some embodiments, the cutting edge may be discontinuous, such that the cutting edge 2A makes a helical cut along some portions of the length of food item 2A but is not positioned to make helical cuts along other portions of the length of the food item 2A. One of ordinary skill in the art with a thorough review of this specification could form and position the knife within the upper housing 30 to make the desired cut (cuts) within the food item with merely routine optimization.

The cutting edge 38 of the knife 36 is disposed vertically above the first and second cylinders 62, 64 within each sub-assembly 52 that is traveling under the upper housing 30 to prevent contact therebetween.

The upper housing 30 may rest directly upon the base 20. The upper housing 30 may include a handle to assist in the removal of the upper housing 30 from the base, and may include one or several positioning and locking structures 39a to properly position and fix the upper housing 30 to the base 20.

As depicted in FIGs. 8-8E, in some embodiments, the knife 36 is pivotable such that it can extend in a vertical direction (FIGs. 8-8B) - i.e. along a plane that is perpendicular to the upper surface of the upper housing 30, (also perpendicular to the longitudinal axes through the rods that form the rotational axes of each of the rollers - rods 62a, 64a, 66a) (and in typical uses of the machine 10 perpendicular to the floor or surface that the machine 10 rests upon (9, FIG. 2). Alternatively, the knife 36 can extend in an angled alignment, at an acute angle ΘΘ to the upper surface of the upper housing 30 (also to the perpendicular to the longitudinal axes through the rods that form the rotational axes of each of the rollers - rods 62a, 64a, 66a) (and in typical uses of the machine to the floor / surface that the machine rests upon) (FIGs. 8C-8E). The knife 36 is held within one or more brackets 39 that rigidly support the knife 36 upon the upper housing 30 such that the knife edge 38 extends through a slot 35 in the upper housing 30. The brackets 39 may be provided with a plurality of pre-formed holes, that allow the knife 36 to either be positioned in the vertical position (holes 39a - bolts extending through the holes 39a in FIGs. 8-8B) or one or more angled positions (holes 39b - bolts extending through holes 39b in FIGs. 8C-8E to align the knife 36 at the angle ΘΘ). For simplicity, the angle ΘΘ (with respect to one or more horizontal surfaces within the machine 10 or the floor 9 that the machine rests upon) is described herein. One of ordinary skill in the art will readily understand that the orientation of the knife 36 could also be measured with respect to a vertical axis that is perpendicular to the horizontal surfaces of the machine or the floor that the machine rests upon, with the acute angle of the knife 36 with respect to the vertical axis designated as acute angle ΔΔ in the figures and has a well understood geometrical relationship with angle ΘΘ.

FIGs. 8A, 8B, 8D, 8E best show to two brackets 39 that support and align opposite sides of the knife 36 so that the knife is extending vertically (FIGs. 8A and 8B) or at the angle ΘΘ (FIGs. 8D, 8E). Each bracket has two or more sets of holes (preferably two or more sets of two holes) that can receive bolts 39z therethrough that connect to corresponding holes (typically blind holes) within the knife 36 to rigidly align the knife 36 with respect to the brackets 39. The brackets 39 are fixed to (or with respect to if not directly connected thereto) to the upper housing 30 to extend above the top surface of the upper housing 30.

A first set of holes (39a) are disposed to align the knife vertically and perpendicular to the applicable reference surfaces mentioned above such that when the knife 36 is fastened to the brackets with fasteners (39z) extending through the first set of holes 39a, the cutting edge 38 extends vertically through the slot 35 within the upper housing. As depicted in FIG. 8, when the knife 36 is disposed in this position the edge 38a cuts into the food item 2A it makes a vertical cut into the food item (FIG. 8).

The second set of holes 39b are provided upon the brackets 39 such that when fasteners 39z extend through the second set of holes 38b to fix the knife 36 with respect to the brackets 39, the knife is held such that it extends at the acute angle ΘΘ with respect to the applicable reference surfaces discussed above, such that the edge 38a cuts into the food item 2A with an angled cut at the same acute angle ΘΘ (FIG. 8C).

In some embodiments, the second set of holes 39b may be a plurality of different holes that are aligned with respect to each other at differing angles, such that when the fasteners 39z extend through each differing set of holes the knife 36 is aligned at a different angle ΘΘ. For example, the set of holes 39b may have holes to align the knife at an angle ΘΘ of about 75 degrees, about 80 degrees, and about 85 degrees. The holes can be aligned at still different positions for still different angles ΘΘ.

In a preferred embodiment depicted in FIGs. 8C-8E, the second set of holes 39b includes two aligned continuous holes, with each continuous holes including three different hole portions (39c, 39d, 39e) such that when the fasteners 39z extend through the different hole portions, the knife will be aligned at different angles ΘΘ. For example, in the configuration depicted in FIGS. 8C-8E, the fasteners 39z extend through the second (middle) hole portion 39d that aligns the knife at the angle ΘΘ of 85 degrees. Axis 2402 depicts the angle of the knife 36 if the fasteners 39z were switched to the first hole portion 39c, and axis 2403 depicts the as shown angle ΘΘ with the fasteners through hole portions 39d, and axis 2404 depicts the angle of the knife 36 if the fasteners were switched to the third hole portion 39d. In other embodiments, the differing sets of holes 39b to establish the knife 36 at an acute angle ΘΘ may be in different positions, and separated from each other.

In embodiments of FIGs. 8C-8E, the slot 35 through the upper housing 30 would include a width, or angled sides to provide room for the knife 36 to rotate to different angles with respect to the upper surface of the upper housing 30.

In a further embodiment, the first and second sets of apertures (39a, 39b) may be included in a plurality of curved tracks or a continuous hole similar to hole 39b depicted in the figures but would extend far enough to support the knife 36 in the vertical orientation, which would allow the fasteners that are fixed to the knife 36 to be moved within the track and tightened to maintain the knife 36 at the desired angle. The holes within the bracket 39 may be at different positions than depicted in the figures, as long as they correspond to features in the knife 36 such that when fasteners 39z extend through the appropriate holes and are fixed with respect to the knife 36 the knife is maintained at the desired angle.

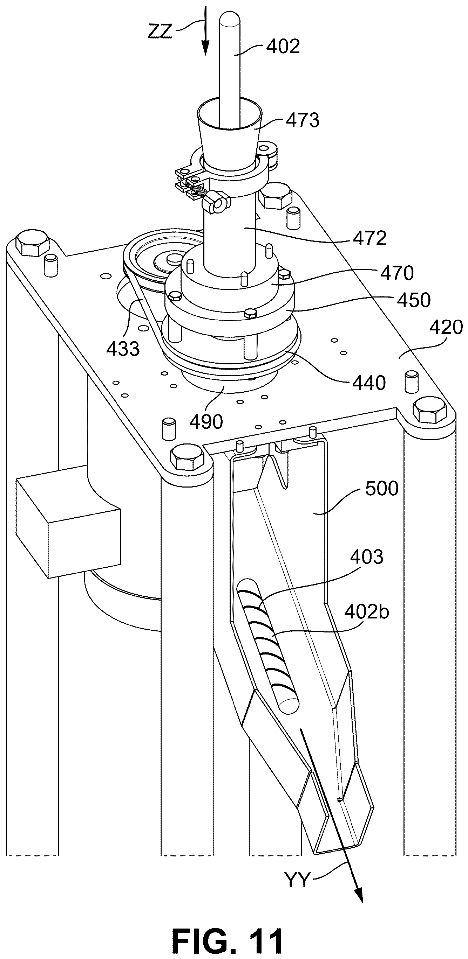

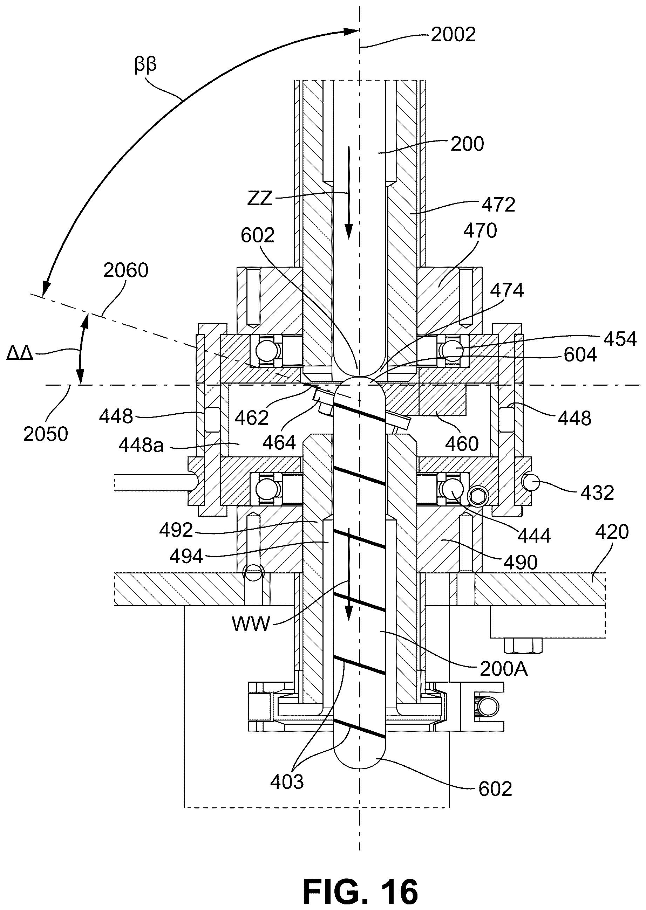

Turning now to FIGs. 10-16, the second slicing machine 400 is provided. The second machine 400 is configured to receive a feed of food items 402 therein (which may be hot dogs, bratwurst, or other cylindrical food items (or cylindrical non-food items), and is configured to form a spiral cut in the same food items as the first slicing machine 100) and produce a spiral cut 403 along the length of the food item 402, cut food items 403 best seen in FIGs. 11 and 16. The machine 400 is configured to receive an infeed of food items 402 in a vertical direction (ZZ) with the food items 402 individually inserted into a hopper 473, which may have a funnel shaped end portion to allow for food items 402 to be inserted into the infeed portion 472 in orientations that are not exactly vertical (i.e. not exactly along the axis 2002 depicted in the figures, with the funnel 473 transporting the food item 402 to a vertical orientation within an inner cavity 474 therein). The machine 400 is configured to receive a manual feed of food items 402 into the infeed portion 472, or is configured to receive continuous or periodic feed of food items into the infeed portion via a conveyor, a pressurized tube, or another source from another machine.

The second machine 400 includes a base 420 that rests directly upon a surface 9 that may be a floor or a counter or another rigid component, which itself rests upon a floor. The base 420 supports a movement path 520 that is formed by portions of a fixed assembly and extends through a rotating assembly that is supported with respect to the fixed assembly. As discussed in further detail below, a knife 464 is supported by the rotating assembly and includes a cutting edge 464a that cuts into a food item 402A that moves through the movement path 520 toward the knife 464 through the fixed assembly. The interaction between the cutting edge 464a and the food item 402A controls the movement of the food item through that portion of the movement path 520, and as the food item 402A moves past the knife a spiral cut (or cut into the food item) 403 is provided within the food item 402A. When the food item 402A moves all of the way past the knife 464, the cutting edge 464a disengages from the now cut food item 402B and the food item moves further through the movement path 430, typically due to the force gravity, or in other embodiments via a conveyor (not shown) that translates the cut food item 402B out of the machine 400 through an outfeed portion 500. The outfeed portion 500 may be connected to a separate machine (not shown) or line that may package, cook, refrigerate, freeze, further process, or store the cut food item 402B.

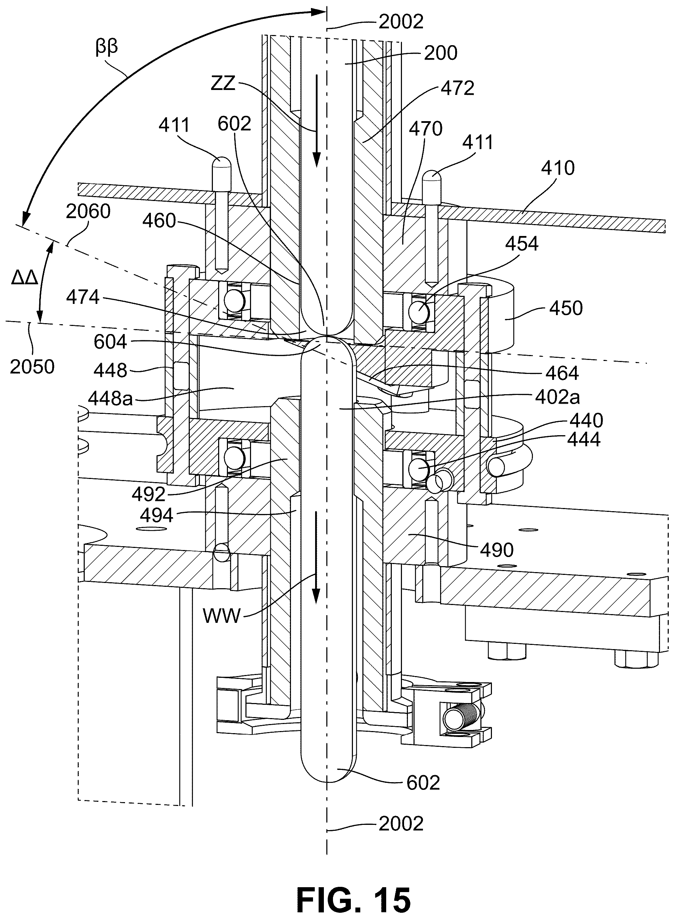

The second machine 400 includes a housing 410 that is provided and services one or more purposes. An initial purpose of the housing 410 is to provide a safety barrier to prevent human or other interaction with the rotating components (e.g. transmission 432 and first and second rotating portions 440, 450) disposed within the machine 400. FIGs. 10 and 15 (schematically) depicts the housing 410 upon the machine, with the remaining figures depicting the machine with the housing 410 removed. The housing 410 may also support fixed components of the machine, such as a fixed entry portion 470 that forms a part of the movement path, as depicted in FIG. 15. Remaining fixed portions, such as a second fixed portion 480 is fixed to the base 420 of the machine 400. In some embodiments, the fixed portions 470, 490 may both be supported by the base 420, and in some embodiments, the fixed portions 470, 490 may both be supported by the housing 410.

A rotating member 440, 450 is provided and is rotatably mounted upon a fixed structure of the machine, which may be the base 420 as depicted in the figures or alternatively may be the housing 410. The rotating member 440, 450 receives torque to cause the rotating member 440, 450 to rotate about a longitudinal axis 2002, which is also the same axis through the movement path 430. In the embodiments depicted in the figures the first rotating member 440 receives torque by way of a belt drive 433 (moving in direction BB, what causes the rotating member to rotate in direction AA), which is rotated by a pulley 432 that is fixed to a shaft of a motor 429. The pulley 432 is rotatably mounted upon the base 420, but in other embodiments could be mounted to the housing 410. In other embodiments, the second rotating member 450 may receive torque either directly or by way of a transmission (e.g. like the belt and pulley drive as depicted in the figures). Other types of transmissions may be provided, e.g. a gear upon a rotating member 440/450 that is in meshed with an input gear, or an idler gear train that receives torque from an input gear, or other types of transmissions known in the art).

The first and second rotating members 440, 450 are fixed together with one or more fasteners 448 disposed therebetween. The fist and second rotating members 440, 450 are fixed together with a space 448a that extends between the surfaces of the members that face each other, e.g. in the embodiment depicted an upper surface 440a of the first rotating member 440 and a lower facing surface 450b of the second rotating member 450. The members may be disposed in the opposite manner, such as the first rotating member 440 is above the second rotating member 450 such that the lower surface of the first member 440 faces the upper surface of the second member, with the space 448a disposed between those surfaces. The space 448a may be established with ledges in the fasteners 448 that have portions that are enlarged with a greater diameter than the hole in the respective member that receives the fastener, with the spacing of the ledges establishing the distance of the space 448a. Alternatively, the first rotating member 440 may be rotatably fixed to the fixed portion 490 that is fixed to the base 420, and the second rotating member 450 may be rotatably fixed to the fixed portion 470 that is fixed to the housing 410 and the positions of the respective fixed portions 490 and 470 establish the space 448a.

The first rotating member 440 may be connected to the fixed portion 490 with a bearing set 444 (FIGs. 15, 16) to allow relative rotation therewith, and the second rotating member 450 may be connected to the fixed portion 470 with a bearing set 454.

The second rotating member 450 fixedly supports a wedge portion 460 such that the wedge portion 460 rotates within the rotation of the second rotating member 450. A flat surface of the wedge portion 460 makes surface-to-surface contact with a lower surface 450b of the second rotating member 450 and is fixed thereto. The wedge portion 460 includes an inclined surface 462 that extends along a plane 2060 that is at an acute angle ββ with respect to the longitudinal axis 2002 that extends along the center of the movement path 520. The acute angle ββ is 65 degrees in the embodiment depicted within the figures. The plane 2060 is therefore disposed at an angle ΔΔ of 35 degrees with respect to a horizontal plane (2050) that extends through a bottom surface of the wedge portion 460, which is preferably parallel to the floor 9 or surface that the machine 400 rests upon. The angle ββ of the plane 2060 through the inclined surface 462 with respect to the longitudinal axis 2002 will be understood as determinative the pitch of the cut (403) that is formed upon a food item 202A that slides through the movement path 520 (along axis 2002). One of ordinary skill in the art with a thorough review of this specification will readily understand that changes in the angle ββ will result in changes in the angle of the cut 403 upon the food item 402A (402b, fully cut food item), which also controls the pitch between adjacent parallel cuts along the length of the food item. Discussion of setting the angle β in the embodiment 100 discussed above are equally applicable to setting the angle ββ in this embodiment. In some embodiments the angle ββ may be between about 80 degrees and about 45 degrees, inclusive of all angles within this range, such as 45, 50, 55, 60, 65, 70, 75, and 80 degrees. In embodiments, if it is desired to change the angle ββ for the cut 403, a wedge portion 460 with an inclined surface 462 with a plane that extends at a different angle ββ (typically within the range above, although it could be outside of the range to a smaller angle if desired) could be installed upon the second rotating member 450.

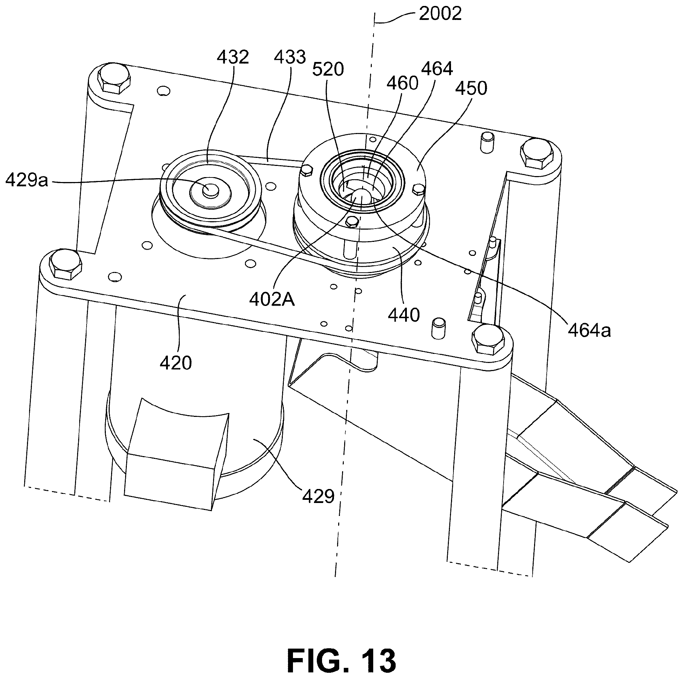

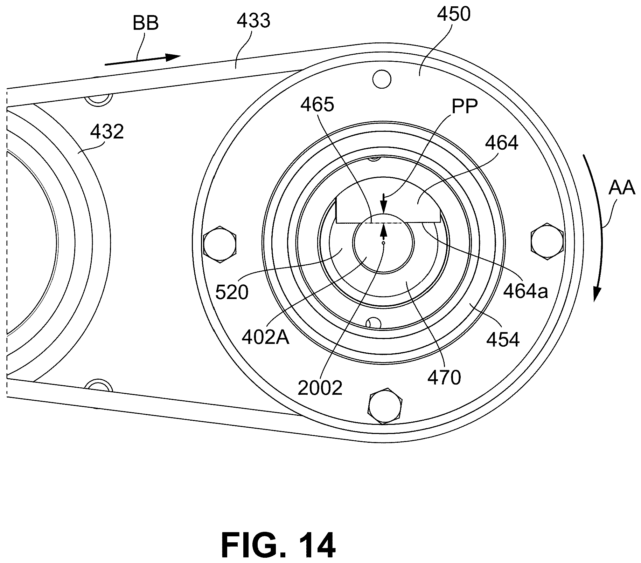

The wedge portion 460 supports a cutting blade 464 upon the inclined surface, so that a cutting edge 464a of the cutting blade extends along a line that is through the plane 2060 (or parallel to and just offset of the plane 2060 depending upon the thickness of the cutting blade 464). The cutting blade 464 is aligned upon the wedge surface 462 such that the cutting blade 464 is disposed within the space 448a between the first and second rotating portions 440, 450, and the cutting edge 464a is aligned within the movement path 520 below the fixed portion 470 and above the movement path within the fixed portion 490, as best depicted in FIGs. 13 and 14. As the wedge portion 460 is rotated with the second rotating portion 450, the cutting edge 464a moves within the movement path (rotational direction AA) at the same rotational velocity that the second rotating portion 450, and the first rotating portion 440 is rotated (either by the transmission 433/432, or directly as discussed above).

The cutting blade 464 is positioned such that the cutting edge 464 does not cross the longitudinal axis 2002 of the movement path 520. Due to this orientation, an elongate food item 402A (i.e. the food item that is currently being cut into by the blade edge 464a) is cut into the by the cutting edge a depth PP (FIG. 14, line 465 depicts the cut through the food item 402A formed at the instant that the figure is depicting) that is less than half of the diameter of the food item 402a, and in preferred embodiments significantly less than half of the diameter of the food item. In some embodiments, the blade 464 may be positioned such that the cutting edge 464a is positioned to establish a cutting depth PP of less than 25 percent of the diameter of the food item 402, or within a range of about 10% to about 35% of the diameter, in situations where the diameter of the food item is just less than the inner diameter of the movement path 520, which ensures that the food item 402A within the movement path is aligned with a longitudinal axis that is co-linear to the longitudinal axis 2002, or parallel to and just slightly offset from the longitudinal axis 2002. The sizing of the diameter of the food item 402 with a diameter just smaller than an inner diameter of the movement path 520 ensures that the cutting depth along the entire circumference of the food item 402A, 402B is substantially constant.

The movement path 520 is formed from the first and second fixed portions 470, 490 and extends through the space 448a between the first and second rotating members 440, 450. The movement path 520 is preferably along a line 2002 that extends from the inlet 472 (path 474) (and center of the funnel 473 when provided), through the space 448, and to a movement outlet 494. An upper portion of the movement path 520 is formed by a first cylindrical path member 472 that may be cylinder that is fixed to the fixed portion 470. The second cylindrical path member 472 includes a central axis that is preferably co-linear with the central axis 2002. The cylinder includes an inner space 474 with a diameter that is preferably just larger than an outer diameter of the food item 402 to be cut, and specifically just larger than a largest possible diameter of the food item with a maximum tolerance or a maximum diameter from a possible range of diameters. The cylinder 472 leads from the inlet (that extends out of the housing 410) and into the housing, and preferably leads directly into the space 448a.

Below the portion within the space 448 where the wedge portion 460 and the blade 464 extends, a lower cylindrical path member 492 is provided that is preferably a cylinder with a central axis that is co-linear with a central axis 2002. The inlet of the lower cylindrical path member 492 is aligned to receive a cut portion of the food item 402A (i.e. the portion that translates below the blade) within the inner space 494 thereof. The portion of the food item 402A below the blade that enters into the path member 492 is traveling at the speed that is a function of the blade angle ββ and the angular velocity of the rotating members 440, 450 as discussed above. After the food item 402A has fully passed by the cutting blade 464, the food item falls from the cutting blade and translates through the path member 492 by gravity (assuming that there is no food item still within the path that is blocking the fall by gravity). In some embodiments, the inner space 494 within the path member 492 may have a diameter that is significantly greater than the uncut diameter of the food item 204, for one or more reasons - the diameter of the cut food item 204A, B may increase due to the cuts made, and there is no need to properly align the cut food items 204A, B as there is to align the food items 402 before they are cut, and the act of cutting the food item 402A within the open space may tend to move the food item 204A to an orientation that is offset from the central line 2002.

The first and second rotating members 440, 450 are preferably rotated at a constant angular velocity. The angular velocity of the second rotating member 450 becomes the angular velocity of the cutting edge 464a. This angular velocity when the cutting edge 464 engages the food item 402A that falls onto the leading edge of the cutting edge 464, with the leading edge of the cutting edge 464a cutting into the food item therefore resists the food item 402A from continuing to fall within the movement path due to gravity. Instead, the translation of the food item 402A being cut (arrow WW, FIGs, 15, 16) is a function of the angle ββ of the cutting edge 464a and the angular velocity of the cutting edge 464a. One of ordinary skill in the art with a thorough review and understanding of this specification will readily understand how to calculate the translation speed of the food item 402A through the space 448a.

When the opposite end of the food item 402A reaches the end of the cutting edge 464a, the new fully cut food item 402B falls from the cutting blade and falls by gravity through the movement path 520 through the fixed portion 490. The food item falls out of the machine (YY, FIG. 11) through an outlet 500 or to another machine as discussed above.

Food items 402 may be inserted into the inlet 473 (472) manually and are aligned on top of each other along the longitudinal axis 2002 within the movement zone (FIGs. 15, 16). The food item 402 deposited into the inlet falls through the movement zone 520 via gravity and if unimpeded can fall directly to engage the cutting blade 464 as discussed above. Depending upon the rate that new food items are introduced into the inlet 472 the food item 402 may fall onto one or more food items, such as falling onto a food item 402A that is currently engaged with and being cut by the cutting blade 464, or an intermediate food item 402 that is above a food item 402A being cut but hasn't itself reached the cutting blade. In this situation, the food items 402 waiting to be cut will translate (ZZ) along the longitudinal axis 2002 within the movement path at the same speed that the food item being cut 402A is translated as urged by the engagement with the edge 464a of the rotating cutting blade 464.

The term "about" is specifically defined herein to include a range that includes the reference value and plus or minus 5% of the reference value. The term "substantially the same" is when the item under comparison is within 5% of the aspect of the reference value of the item. The term "substantially" is when the referenced value or referenced aspect is within 5% of the reference value. For example, if the referenced item is an angle, something is substantially at that angle if it is within plus or minus 5% of the angle. The term "substantially" referenced with respect to a state (e.g. a path being substantially blocked) means that referenced state is blocked but may allow for di minimus flow therepast. The term "substantially" is when the term under comparison is not the exact same item (such as shape or length) as mentioned but with only di minimus changes from the referenced item as those di minimus changes would be appreciated by one or ordinary skill in the art, such as changes that do not significantly affect the structure or function of the item. The term "support" may be direct support (i.e. one item is directly supported by another other item - typically with contact therebetween) as well as indirect support (i.e. one item supports another item due to an intervening member that is typically on contact with both items and the supporting force is transferred through the intervening member).

The computing elements or functions disclosed herein (such as the controller 1000) may include a processor and a memory storing computer-readable instructions executable by the processor. In some embodiments, the processor is a hardware processor configured to perform a predefined set of basic operations in response to receiving a corresponding basic instruction selected from a predefined native instruction set of codes. Each of the modules defined herein may include a corresponding set of machine codes selected from the native instruction set, and which may be stored in the memory. Embodiments can be implemented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, optical disc, memory device (volatile or non-volatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described embodiments can also be stored on the machine-readable medium. Software running from the machine- readable medium can interface with circuitry to perform the described tasks. Moreover, embodiments may be implemented on application specific integrated circuits (ASICs) or very large scale integrated (VLSI) circuits. In fact, persons of ordinary skill in the art may utilize any number of suitable structures capable of executing logical operations according to the embodiments.

Naturally, in view of the teachings and disclosures herein, persons having ordinary skill in the art may appreciate that alternate designs and/or embodiments of the invention may be possible (e.g., with substitution of one or more components for others, with alternate configurations of components, etc.). Although some of the components, relations, configurations, and/or steps according to the invention are not specifically referenced and/or depicted in association with one another, they may be used, and/or adapted for use, in association therewith. All of the aforementioned and various other structures, configurations, relationships, utilities, any which may be depicted and/or based hereon, and the like may be, but are not necessarily, incorporated into and/or achieved by the invention. Any one or more of the aforementioned and/or depicted structures, configurations, relationships, utilities and the like may be implemented in and/or by the invention, on their own, and/or without reference, regard or likewise implementation of any of the other aforementioned structures, configurations, relationships, utilities and the like, in various permutations and combinations, as will be readily apparent to those skilled in the art, without departing from the pith, marrow, and spirit of the disclosed invention

While the preferred embodiments of the disclosed have been described, it should be understood that the invention is not so limited and modifications may be made without departing from the disclosure. The scope of the disclosure is defined by the appended claims, and all devices that come within the meaning of the claims, either literally or by equivalence, are intended to be embraced therein.

The specification can be readily understood with reference to the following Numbered Paragraphs:
Numbered Paragraph 1: An apparatus for forming a spiral cut in a cylindrical member, comprising:
   a base that supports a moving mechanism along the base,
   an upper housing that is fixed to the base and is positioned to face the base,
   the upper housing supports an elongate blade thereon, with an edge portion of the blade extending downwardly from the upper housing toward the base;
   the moving mechanism comprises a conveyor system that includes first and second tracks on opposite sides thereof, and moves along the base,
   wherein the conveyor system comprises a plurality of spaced sub-assemblies disposed therein, each sub-assembly of the plurality of spaced sub-assemblies is formed in the same manner, wherein the conveyor system moves along a movement direction when it moves along the base and directly below the upper housing;
   wherein each sub-assembly includes three cylinders that are rotatably mounted with respect to the conveyor system and are each freely rotatable about a longitudinal axis that extends through a center of each cylinder, wherein the first and second cylinders of the three cylinders of each sub assembly are disposed to establish an open space between a closest adjacent surface of each of the first and second cylinders, wherein a third of the three cylinders is disposed such that the longitudinal axis of the third cylinder is aligned at a vertical position below the longitudinal axes of the first and second cylinders and the longitudinal axis of the third cylinder is vertically aligned within the open space.
Numbered Paragraph 2: The apparatus for forming a spiral cut in a cylindrical member of Numbered Paragraph 1, wherein the elongate blade is disposed at an acute angle with respect to the movement direction.
Numbered Paragraph 3: The apparatus for forming a spiral cut in a cylindrical member of either of Numbered Paragraphs 1 or 2, wherein the first and second cylinders within each respective sub-assembly is positioned vertically below and not in contact with the edge portion of the blade when each respective sub-assembly is movably disposed vertically below and facing the blade.
Numbered Paragraph 4: The apparatus for forming a spiral cut in a cylindrical member of any one of the preceding Numbered Paragraphs, wherein the first and second tracks each include a plurality of apertures in each sub-assembly of the plurality of sub-assemblies, wherein a rod portion extends from opposite first and second ends of each of the first, second, and third cylinders and each respective rod portion is co-linear with the respective longitudinal axis through the respective cylinder, wherein the rod portion from each cylinder extends within corresponding apertures in the first and second tracks.
Numbered Paragraph 5: The apparatus for forming a spiral cut in a cylindrical member of Numbered Paragraph 4, wherein the plurality of apertures on each of the first and second tracks for each sub-assembly comprise a first aperture that is aligned for the rod portion from the first cylinder, a plurality of second apertures that are each aligned to selectively receive the rod portion from the second cylinder, and a plurality of third apertures that are each aligned to selectively receive the rod portion from the third cylinder.
Numbered Paragraph 6: The apparatus for forming a spiral cut in a cylindrical member of Numbered Paragraph 5, wherein the second plurality of apertures are horizontally aligned upon the respective first and second tracks within each sub-assembly, wherein a center of each aperture within the second plurality of apertures is disposed along a first line that extends either through the first aperture or extends parallel to the movement direction, wherein the width of the open space is changed depending upon the second aperture within the plurality of apertures that the rod portion of the second cylinder extends through.
Numbered Paragraph 7: The apparatus for forming a spiral cut in a cylindrical member of Numbered Paragraph 6, wherein the third plurality of apertures are disposed along a second line within each of the respective first and second tracks for each sub-assembly, wherein the second line is disposed at an acute angle with respect to the first line.
Numbered Paragraph 8: The apparatus for forming a spiral cut in a cylindrical member of Numbered Paragraph 5, wherein the third plurality of apertures are disposed along a line within each the respective first and second tracks for each sub-assembly, wherein the line is disposed at an acute angle with respect to the movement direction of the sub-assembly.
Numbered Paragraph 9: The apparatus for forming a spiral cut in a cylindrical member of Numbered Paragraph 4, wherein the plurality of apertures on each of the first and second tracks for each sub-assembly comprise a first aperture that is aligned for the rod portion from the first cylinder, a one or a plurality of second apertures that are each aligned to selectively receive the rod portion from the second cylinder, and a plurality of third apertures that are each aligned to selectively receive the rod portion from the third cylinder,
   wherein the third plurality of apertures are disposed along a line within the respective first and second track for each sub-assembly, wherein the line is disposed at an acute angle with respect to the movement direction of the sub-assembly
Numbered Paragraph 10: The apparatus for forming a spiral cut in a cylindrical member of Numbered Paragraph 9, wherein the first aperture and the one second aperture or one of the plurality of second apertures are aligned along a second line that is parallel to the movement direction of the sub-assembly.
Numbered Paragraph 11: The apparatus for forming a spiral cut in a cylindrical member of any one of the preceding Numbered Paragraphs, wherein each sub-assembly that is aligned such that a cylindrical member that is positioned upon the respective sub-assembly that is being cut by the edge portion of the blade moves in the movement direction that extends through a first plane that is parallel to a second plane that extends along the edge portion of the blade.
Numbered Paragraph 12: The apparatus for forming a spiral cut in a cylindrical member of any one of the preceding Numbered Paragraphs, wherein after each sub-assembly passes below the blade and then past an end portion of the blade, the movement direction of each subassembly extends in a downward direction with a vector component that extends toward a floor that the base rests upon, wherein a cylindrical member that is supported by the respective sub-assembly that is traveling in the movement direction with the vector component that extends toward the floor is urged to fall away from respective sub-assembly.
Numbered Paragraph 13: The apparatus for forming a spiral cut in a cylindrical member of any one of the preceding Numbered Paragraphs, wherein the first, second, and third cylinders each have the same diameter.
Numbered Paragraph 14: The apparatus for forming a spiral cut in a cylindrical member of any one of the preceding Numbered Paragraphs, wherein the open space is configured to be established that is larger than a diameter of a cylindrical member to be positioned upon the sub-assembly to be cut by the edge portion of the blade.
Numbered Paragraph 15: The apparatus for forming a spiral cut in a cylindrical member of any one of the preceding Numbered Paragraphs the third cylinder is disposed such that a tangent line that extends through an upper most surface of the third cylinder extends through the first and the second cylinders.
Numbered Paragraph 16: The apparatus for forming a spiral cut in a cylindrical member of any one of the preceding Numbered Paragraphs, wherein the cylindrical member to be cut that is received within a sub-assembly of the plurality of sub-assemblies rests upon the third cylinder when the respective sub-assembly is aligned under the blade so that the cylindrical member is cut into by the edge portion of the blade.
Numbered Paragraph 17: The apparatus for forming a spiral cut in a cylindrical member of any one of the preceding Numbered Paragraphs the third cylinder is arranged upon each respective sub-assembly, such that a cylindrical member that is intended to be cut by the edge portion of the blade when the respective sub-assembly that supports the cylindrical member is disposed under the blade is cut to a depth that does not reach a center line through the cylindrical member.
Numbered Paragraph 18: The apparatus for forming a spiral cut in a cylindrical member of any one of the preceding Numbered Paragraphs, wherein the third cylinder is arranged upon each respective sub-assembly such that the cylindrical member is cut to the depth that extends into the cylindrical a member a distance that is about one quarter of a diameter of the cylindrical member.
Numbered Paragraph 19: The apparatus for forming a spiral cut in a cylindrical member of any one of the preceding Numbered Paragraphs, wherein sub-assemblies of the plurality of sub-assemblies of the conveyor that are disposed directly under and facing the upper housing are arranged such that a cylindrical member that rests upon the sub-assembly contacts the upper housing and with relative movement of the sub-assembly with respect to the upper housing causes the cylindrical member to rotate about its longitudinal axis, such that when the cylindrical member reaches a first end of the edge portion of the blade, the edge portion of the blade cuts into the cylindrical member and forms a spiral cut along a length of the cylindrical member as the cylindrical member rotatably moves along the edge portion.
Numbered Paragraph 20: The apparatus for forming a spiral cut in a cylindrical member of any one of the preceding Numbered Paragraphs, further comprising a feeding mechanism disposed upstream of the upper housing and disposed to deposit a cylindrical member onto a sub-assembly as the sub-assembly moves below the feeding mechanism.
Numbered Paragraph 21: The apparatus for forming a spiral cut in a cylindrical member of any one of the preceding Numbered Paragraphs, wherein the blade can be supported to extend downwardly from the upper housing toward the base wherein upper housing is configured to support the knife in a vertical orientation and in one or more orientations where the knife supported at an acute angle away from the vertical orientation.
Numbered Paragraph 22: The apparatus for forming a spiral cut in a cylindrical member of Numbered Paragraph 21, wherein the blade is supported by one or more brackets at an end thereof, wherein the bracket comprises a first set of apertures and at least one second set of apertures, wherein fasteners that are received through the first set of apertures and are fixed with respect to the blade cause the blade to be aligned in the vertical orientation, and wherein fasteners that are received through one of the second set of apertures cause the blade to be aligned at the acute angle away from the vertical orientation.
Numbered Paragraph 23: The apparatus for forming a spiral cut in a cylindrical member of any one of the preceding Numbered Paragraphs, wherein the first cylinder, the second cylinder, and the third cylinder are mounted such that a cylindrical member that is disposed within the open space is aligned such that a horizontal plane through a longitudinal axis of the cylindrical member extends substantially across a substantially upper facing surface of the first and second cylinders.
Numbered Paragraph 24: The apparatus for forming a spiral cut in a cylindrical member any one of the preceding Numbered Paragraphs, wherein the cylindrical member is received within the open space such that the first and second cylinders contact the cylindrical member at a position that is below a horizontal plane that extends through a longitudinal axis of the cylinder.
Numbered Paragraph 25: An apparatus for forming a spiral cut in a cylindrical member, comprising:
   a base that supports a housing, a rotating member, and a fixed member, the fixed member is supported by one or both of the housing and the base the rotating member is supported by one of the housing or the base, the fixed member comprises an inlet is configured to direct a cylindrical member to be fed into a cylindrical space that is formed by the fixed member or a combination of the fixed member and the rotating member, the cylindrical member received within the cylindrical space translates through the cylindrical space, and the cylindrical space allows the cylindrical member to move longitudinally therethrough and longitudinally with respect to the rotating member, and
   a blade with an edge portion that extends into a position within the cylindrical space, and as the cylindrical member translates through the cylindrical space a leading end of the cylindrical member contacts and is cut into by the edge portion of the blade.
Numbered Paragraph 26: The apparatus for forming a spiral cut in a cylindrical member of Numbered Paragraph 25, wherein the cylindrical space extends along a longitudinal axis, and the blade is supported within the housing such that a line through the edge portion of the blade is disposed at an acute angle with respect to the longitudinal axis.
Numbered Paragraph 27: The apparatus for forming a spiral cut in a cylindrical member of Numbered Paragraph 26, wherein the rotating member includes a first portion and a second portion that are fixed together such that rotation of the first portion causes rotation of the second portion at the same angular velocity, wherein the first and second portions are disposed with a space therebetween, wherein the blade is disposed within the housing so that the blade extends within the space between the first and second portions.
Numbered Paragraph 28: The apparatus for forming a spiral cut in a cylindrical member of Numbered Paragraph 27, wherein the cylindrical space extends through the first portion of the rotating member and through the second portion of the rotating member.
Numbered Paragraph 29: The apparatus for forming a spiral cut in a cylindrical member of Numbered Paragraph 28, wherein a diameter of the cylindrical space through the first portion is the same or greater than a diameter of the cylindrical space through the second portion.
Numbered Paragraph 30: The apparatus for forming a spiral cut in a cylindrical member of any one of Numbered Paragraphs 27-29, wherein the first portion is rotated within by a transmission.
Numbered Paragraph 31: The apparatus for forming a spiral cut in a cylindrical member of any one of Numbered Paragraphs 25-30, wherein the blade is fixed to the rotating member such that the blade rotates with the rotating member.
Numbered Paragraph 32: The apparatus for forming a spiral cut in a cylindrical member of Numbered Paragraph 31, further comprising a wedge surface, wherein the blade is rigidly supported upon the wedge surface, and the wedge surface is fixed to one of the first or second portions of the rotating member, wherein the wedge surface comprises an angled planar surface upon which the blade is fixed thereto, wherein the cylindrical space extends along a longitudinal axis, wherein the wedge surface is disposed at an acute angle with respect to the longitudinal axis.
Numbered Paragraph 33: The apparatus for forming a spiral cut in a cylindrical member of any one of Numbered Paragraphs 25-32, wherein when the cylindrical member is inserted into the inlet and translates through the cylindrical space, the leading end of the cylindrical member is cut into by the edge portion of the blade, with rotation of the rotating member the cut extends along the cylindrical member in a spiral arrangement along a length of the cylindrical member.
Numbered Paragraph 34: The apparatus for forming a spiral cut in a cylindrical member of Numbered Paragraph 33, wherein the rotation of the rotating member and the engagement of the edge portion of the blade into with the cylindrical member, the cylindrical member is urged to translate through the cylindrical space until the cylindrical member falls away from engagement with the edge portion of the blade.
Numbered Paragraph 35: The apparatus for forming a spiral cut in a cylindrical member of Numbered Paragraph 33, wherein when the cylindrical member is engaged by the edge portion of the blade within the cylindrical space, a further cylindrical member that is inserted through inlet falls onto an upper extending end of the cylindrical member that is currently engaged by the blade, and the further cylindrical members move through the housing at the velocity that the cylindrical member currently engaged with the blade moves through the housing, wherein when the next cylindrical member reaches the leading edge of the blade, the blade cuts into the next cylindrical member and with continued rotation of the rotating member the cut extends through the next cylindrical member in a spiral arrangement.

## Claims

1. An apparatus (100) for forming a spiral cut in a cylindrical member, comprising:
a base (20) that supports a moving mechanism along the base,
an upper housing (30) that is fixed to the base and is positioned to face the base,
the upper housing supports an elongate blade (36) thereon, with an edge portion (38) of the blade extending downwardly from the upper housing toward the base;
the moving mechanism comprises a conveyor system (50) that includes first and second tracks (54, 56) on opposite sides thereof, and moves along the base,
wherein the conveyor system comprises a plurality of spaced sub-assemblies (52) disposed therein, each sub-assembly of the plurality of spaced sub-assemblies is formed in the same manner, wherein the conveyor system moves along a movement direction when it moves along the base and directly below the upper housing;
wherein each sub-assembly includes three cylinders (62, 64, 66) that are rotatably mounted with respect to the conveyor system and are each freely rotatable about a longitudinal axis that extends through a center of each cylinder, wherein the first and second cylinders (62, 64) of the three cylinders of each sub assembly are disposed to establish an open space between a closest adjacent surface of each of the first and second cylinders, wherein a third (66) of the three cylinders is disposed such that the longitudinal axis (66a) of the third cylinder is aligned at a vertical position below the longitudinal axes of the first and second cylinders and the longitudinal axis of the third cylinder is vertically aligned within the open space.

2. The apparatus for forming a spiral cut in a cylindrical member of claim 1, wherein the first and second cylinders within each respective sub-assembly is positioned vertically below and not in contact with the edge portion of the blade when each respective sub-assembly is movably disposed vertically below and facing the blade.

3. The apparatus for forming a spiral cut in a cylindrical member of either of claims 1 or 2, wherein the first and second tracks each include a plurality of apertures (72; 74a, 74b, 74c, 74d; 76a, 76b, 76c, 76d) in each sub-assembly of the plurality of sub-assemblies, wherein a rod portion (62a, 62b, 64a, 64b, 66a, 66b) extends from opposite first and second ends of each of the first, second, and third cylinders and each respective rod portion is co-linear with the respective longitudinal axis through the respective cylinder, wherein the rod portion from each cylinder extends within corresponding apertures in the first and second tracks.

4. The apparatus for forming a spiral cut in a cylindrical member of claim 3, wherein the plurality of apertures on each of the first and second tracks for each sub-assembly comprise a first aperture (72) that is aligned for the rod portion from the first cylinder, a plurality of second apertures (74a, 74b, 74c, 74d) that are each aligned to selectively receive the rod portion from the second cylinder, and a plurality of third apertures (76a, 76b, 76c, 76d) that are each aligned to selectively receive the rod portion from the third cylinder,
wherein the second plurality of apertures are horizontally aligned upon the respective first and second tracks within each sub-assembly, wherein a center of each aperture within the second plurality of apertures is disposed along a first line that extends either through the first aperture or extends parallel to the movement direction, wherein the width of the open space is changed depending upon the second aperture within the plurality of apertures that the rod portion of the second cylinder extends through.

5. The apparatus for forming a spiral cut in a cylindrical member of claim 4, wherein the third plurality of apertures are disposed along a second line within each of the respective first and second tracks for each sub-assembly, wherein the second line is disposed at an acute angle with respect to the first line.

6. The apparatus for forming a spiral cut in a cylindrical member of claim 4, wherein the third plurality of apertures are disposed along a line within each the respective first and second tracks for each sub-assembly, wherein the line is disposed at an acute angle with respect to the movement direction of the sub-assembly.

7. The apparatus for forming a spiral cut in a cylindrical member of any one of claims 1-6, wherein the elongate blade is disposed at an acute angle with respect to the movement direction.

8. The apparatus for forming a spiral cut in a cylindrical member of any one of claims 1-7, wherein after each sub-assembly passes below the blade and then past an end portion of the blade, the movement direction of each subassembly extends in a downward direction with a vector component that extends toward a floor that the base rests upon, wherein a cylindrical member that is supported by the respective sub-assembly that is traveling in the movement direction with the vector component that extends toward the floor is urged to fall away from respective sub-assembly.

9. The apparatus for forming a spiral cut in a cylindrical member of any one of claims 1-8, wherein the third cylinder is arranged upon each respective sub-assembly, such that a cylindrical member that is intended to be cut by the edge portion of the blade when the respective sub-assembly that supports the cylindrical member is disposed under the blade is cut to a depth that does not reach a center line through the cylindrical member.

10. The apparatus for forming a spiral cut in a cylindrical member of claim 9, wherein the third cylinder is arranged upon each respective sub-assembly such that the cylindrical member is cut to the depth that extends into the cylindrical a member a distance that is about one quarter of a diameter of the cylindrical member.

11. The apparatus for forming a spiral cut in a cylindrical member of any one of claims 1-10, wherein sub-assemblies of the plurality of sub-assemblies of the conveyor that are disposed directly under and facing the upper housing are arranged such that a cylindrical member that rests upon the sub-assembly contacts the upper housing and with relative movement of the sub-assembly with respect to the upper housing causes the cylindrical member to rotate about its longitudinal axis, such that when the cylindrical member reaches a first end of the edge portion of the blade, the edge portion of the blade cuts into the cylindrical member and forms a spiral cut along a length of the cylindrical member as the cylindrical member rotatably moves along the edge portion.

12. The apparatus for forming a spiral cut in a cylindrical member of any one of claims 1-11, wherein the blade can be supported to extend downwardly from the upper housing toward the base wherein upper housing is configured to support the blade in a vertical orientation and in one or more orientations where the blade supported at an acute angle away from the vertical orientation.

13. The apparatus for forming a spiral cut in a cylindrical member of claim 12, wherein the blade is supported by one or more brackets (39) at an end thereof, wherein the bracket comprises a first set of apertures (39a) and at least one second set of apertures (39b, 39c, 39d, 39e), wherein fasteners that are received through the first set of apertures and are fixed with respect to the blade cause the blade to be aligned in the vertical orientation, and wherein fasteners that are received through one of the second set of apertures cause the blade to be aligned at the acute angle away from the vertical orientation.

14. The apparatus for forming a spiral cut in a cylindrical member of any one of claims 1-13, wherein the first cylinder, the second cylinder, and the third cylinder are mounted such that a cylindrical member that is disposed within the open space is aligned such that a horizontal plane through a longitudinal axis of the cylindrical member extends substantially across a substantially upper facing surface of the first and second cylinders.

15. The apparatus for forming a spiral cut in a cylindrical member of any one of claims 1-14, wherein the cylindrical member is received within the open space such that the first and second cylinders contact the cylindrical member at a position that is below a horizontal plane that extends through a longitudinal axis of the cylinder.
